**Europäisches Patentamt**

**European Patent Office**

**Office européen des brevets**

(19)

(11) Veröffentlichungsnummer: **0 361 005 B1**

(12)

# EUROPÄISCHE PATENTSCHRIFT

(45) Veröffentlichungstag der Patentschrift: **23.12.92**

(51) Int. Cl.5: **B60C 23/04**

(21) Anmeldenummer: **89113435.5**

(22) Anmeldetag: **21.07.89**

(54) **Vorrichtung zum Überwachen des Luftdruckes eines Fahrzeugrades.**

(30) Priorität: **12.08.88 DE 3827354**

(43) Veröffentlichungstag der Anmeldung:
**04.04.90 Patentblatt 90/14**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**WO-A-81/01688      DE-A- 3 018 246**
**DE-A- 3 037 722      DE-A- 3 734 053**
**FR-A- 2 219 850      FR-A- 2 622 289**

(73) Patentinhaber: **Alligator Ventilfabrik GmbH**
**Alleenstrasse 1**
**W-7928 Giengen/Brenz(DE)**

(72) Erfinder: **Franke, Horst Prof. dipl. ing.**
**Marderstrasse 20/4**
**W-7080 Aalen(DE)**
Erfinder: **Weng, Otto Dipl. ing.**
**7094, Unterschneidheim**
**Wossingen 17(DE)**
Erfinder: **Schmid, Hansjörg dipl. ing.**
**Bergfeldstrasse 13**
**W-7087 Essingen(DE)**

(74) Vertreter: **Hiebsch, Gerhard F., Dipl.-Ing. et al**
**Hiebsch & Peege Patentanwälte Postfach**
**464 Erzbergerstrasse 5a**
**W-7700 Singen 1(DE)**

## Beschreibung

Die Erfindung betrifft eine Vorrichtung zum Überwachen des Luftdruckes in einem von der Felge eines Fahrzeugrades getragenen Luftreifen entsprechend dem Oberbegriff des Patentanspruches 1.

Eine solche Vorrichtung ist aus der WO-A 81/01688 bekannt, die eine "Vorrichtung zum Vergleichen des Bezugsdruckes für Fahrzeugreifen mit einer Fernanzeige" beschreibt.

Nach dieser Schrift ist der elastische Faltenbalg dadurch an seiner Außenfläche mit dem Reifendruck beaufschlagbar, daß über eine Leitung, die in der Felge verläuft und die mit dem Luftreifen in Verbindung steht, andererseits eine Verbindung zu einer Blindbohrung hergestellt ist, in welcher der Faltenbalg sitzt. Die Blindbohrung ist in einer Hülse ausgespart, die nahe der Radnabe angeordnet ist und parallel zur Achse der Radnabe durch Felge, Nabendeckel und Bremsen hindurchreicht. In der Hülse sitzt ein handelsübliches Ventil zum Aufblasen des Luftreifens von der Außenseite, wobei am inneren Ende des Ventils der Faltenbalg befestigt ist.

Der Reifen wird also über das Ventil und die eingangs genannte Leitung aufgepumpt und gleichzeitig das Innere des Faltenbalges auf den Servicedruck des Reifens gebracht, der im Inneren des dortigen Faitenbalges als "Bezugsdruck" bezeichnet wird. Durch das Gleichgewicht der Drücke --einerseits in der Blindbohrung und anderseits innerhalb des Faltenbalges -- wird der Dauermagnet in einem gewissen Abstand vom Boden der Blindbohrung gehalten. Verringert sich der Druck im Reifen -- der "Bezugsdruck" bleibt durch komplizierte Dichtungen und Schikanen konstant -- so streckt sich der Faltenbalg und nähert den Dauermagneten dem Boden der Blindbohrung. Der Abstand zum Sensor wird also geringer.

Der Autor dieser WO-A 81/01688 geht davon aus, daß der notwendige "Bezugsdruck" im Inneren des Faltenbalges jedesmal erneut beim Aufpumpen des Luftreifens festgelegt wird. Wurde also beispielsweise der Reifen an einer Tankstelle falsch aufgepumpt, wird der "Bezugsdruck" im dortigen Faltenbalg zu gering sein, so daß die Anordnung nach der Vorveröffentlichung wohl nicht funktionieren dürfte.

Der Erfindung liegt die Aufgabe zugrunde, diese Fehlermöglichkeit zu beseitigen und dem Autofahrer für sein Fahrzeug die nötige Sicherheit zu gewährleisten.

Zur Lösung dieser Aufgabe führt die Lehre nach den unabhängigen Patentansprüchen.

Erfindungsgemäß herrscht im Inneren des Faltenbalges ein Druck, der als Referenzdruck vom jeweiligen -- vom Aufpumpen abhängigen -- Druck im Luftreifen unabhängig ist.

Auch liegt im Rahmen der Erfindung, den Faltenbalg zu den Achsen des Fahrzeuges in einem Winkel zu neigen, wobei ebenfalls hier der im Inneren des Faltenbalges herrschende Referenzdruck vom jeweiligen Druck im Luftreifen unabhänig bleibt. Dabei hat sich ein Winkel bis zu 10° aus der Achsparallelen als besonders günstig erwiesen, um auf das Rad einwirkende Außenkräfte besser kompensieren zu können.

Weitere vorteilhafte Ausgestaltungen der Erfindung sind den Unteransprüchen zu entnehmen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1:  ein Federbein eines Kraftfahrzeuges mit angeschlossenem Fahrzeugreifen im Längsschnitt;

Fig. 2:  ein gegenüber Fig. 1 vergrößertes Detail;

Fig. 3:  eine der Darstellung der Fig. 2 etwa entsprechende andere Ausführung;

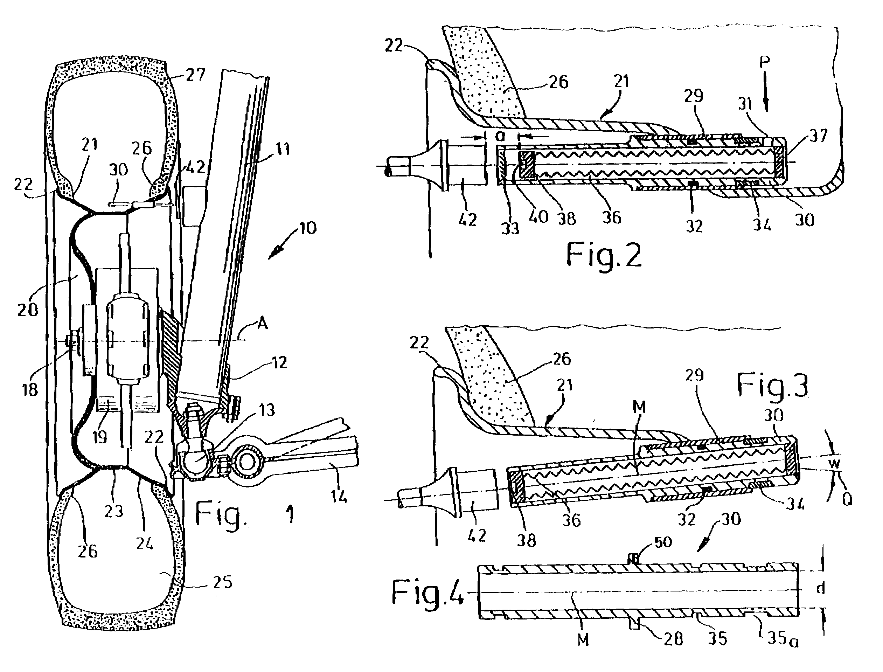

Fig: 4:  den Schnitt durch eine weitere Ausführungsform des Details der Fig. 2.

Ein Fahrzeugrad 10 ist am unteren Teil eines Federbeines 11 eines nicht weiter dargestellten Kraftfahrzeuges festgelegt. Das Federbein 11 endet an einem Spurstangenhebel 12, unterhalb dessen ein Führungsgelenk 13 für einen Querlenker 14 zu erkennen ist.

Das Fahrzeugrad 10 besteht aus einer -- mit einer Radnabe 19 verschraubten und um einen Achszapfen 18 drehbaren --Radschüssel 20 mit angeschlossenem Felgenring 21, an dessen Felgenhörner 22 sich beidseits eines Felgenbettes 23 Randwulste 26 eines Luftreifens 27 anschmiegen.

Dessen Schichtaufbau ist aus Gründen besserer Uebersichtlichkeit in der Zeichnung vernachlässigt. Im Bereich eines stufenartigen Absatzes 24 des zum Federbein 11 weisenden Felgenhornes 22 wird dieser Absatz 24 von einer -- in Fig. 1 etwa zur Achslinie A parallelen -- als Druckrohr 30 ausgebildeten Hülse durchsetzt.

Gemäß Fig. 2 ist im Felgenring 21 eine Außenhülse 29 festgelegt, in der jenes Druckrohr 30 sitzt. Zwischen der Außenhülse 29 und dem an seinem freien Ende durch eine Platte 33 geschlossenen Druckrohr 30 befindet sich ein dichtender O-Ring 32. Das Druckrohr 30 wird durch einen Rastring 34 -- aus transparentem Werkstoff -- in der Außenhülse 29 festgelegt.

Im Druckrohr 30 verläuft ein Metallfaltenbalg 36, der einends an einem Faltenbalghalter 37 festliegt und der über einen Druckrohrdurchbruch 31 mit dem Reifendruck P beaufschlagt wird. Hierdurch wird ein am Faltenbalg 36 endwärts in einem plattenartigen Magnethalter 38 befestigter Permanentmagnet 40 in axialer Richtung bewegt.

Karosserieseitig ist ein Magnetfeldsensor 42 (Hall-Element) befestigt. Die auf diesen wirkende magnetische Feldstärke ist abhängig von der Distanz a zwischen dem Permanentmagneten 40 und dem Magnetfeldsensor 42. An ihm werden bei rotierendem Reifen Impulse erzeugt, deren Amplitudenhöhe dem Reifendruck proportional ist.

Fig. 3 zeigt eine andere Ausführung mit geschlossener Hülse als Druckrohr 30, deren Längsachse M gegenüber einer zu den Fahrzeugachsen parallelen Linie Q in einem Winkel W von bis zu etwa 10° geneigt ist.

Diese Hülse 30 eines Innendurchmesser d von hier 8,3 mm ist mit einem radialen Anschlagkragen 28 versehen sowie mit Umfangskerbungen $35,35_a$ für den O-Ring 32 bzw, den Rastring 34.

Der Anschlagkragen 28 ist mit einer Längsnut 50 versehen, in die eine Nase der Außenhülse 29 greift und so das Druckrohr bzw, die Hülse 30 gegen Verdrehen sichert.

In der Zeichnung nicht dargestellt ist eine Ausführungsform mit radial zur Achse A des Fahrzeugrades 10 verschiebbarem Dauermagneten 40 und diesem entsprechend gegenüberliegendem Meßwertsensor 42.

Die Kompensation des Fliehkrafteinflusses auf den Meßwertsensor 42 erfolgt über einen Mikroprozessor, der die Drehzahlinformation verwertet.

Temperatureinflüsse werden durch ein Temperaturfühlelement angezeigt, um beim Reifendruck den Temperatureinfluß kompensieren zu können.

| Pos. | Benennung / Designation | Pos. | Benennung / Designation | |
|---|---|---|---|---|
| 1 | | 51 | | |
| 2 | | 52 | | |
| 3 | | 53 | | a = Distanz |
| 4 | | 54 | | d = Innendurchmesser v. 30a |
| 5 | | 55 | | |
| 6 | | 56 | | A = Achslinie |
| 7 | | 57 | | |
| 8 | | 58 | | M = Längsachse |
| 9 | | 59 | | P = Reifendruck |
| 10 | Fahrzeugrad | 60 | | Q = Linie |
| 11 | Federbein | 61 | | |
| 12 | Spurstangenhebel | 62 | | W = Winkel M/Q |
| 13 | Führungsgelenk | 63 | | |
| 14 | Querlenker | 64 | | |
| 15 | | 65 | | |
| 16 | | 66 | | |
| 17 | | 67 | | |
| 18 | Achszapfen | 68 | | |
| 19 | Radnabe | 69 | | |
| 20 | Radschüssel | 70 | | |
| 21 | Felgenring | 71 | | |
| 22 | Felgenhorn | 72 | | |
| 23 | Felgenbett | 73 | | |
| 24 | Absatz stufenartig | 74 | | |
| 25 | | 75 | | |
| 26 | Randwulste | 76 | | |
| 27 | Luftreifen | 77 | | |
| 28 | Anschlagkragen | 78 | | |
| 29 | Außenhülse | 79 | | |
| 30 | Druckrohr oder Hülse | 80 | | |
| 31 | Druckrohrdurchbruch | 81 | | |
| 32 | O-Ring | 82 | | |
| 33 | Platte | 83 | | |
| 34 | Rastring | 84 | | |
| 35 | Umfangskerbungen ,35a | 85 | | |
| 36 | Metallfaltenbalg | 86 | | |
| 37 | Faltenbalghalter | 87 | | |
| 38 | Magnethalter | 88 | | |
| 39 | | 89 | | |
| 40 | Permanentmagnet | 90 | | |
| 41 | | | | |
| 42 | Magnetfeldsensor | | | |
| 43 | | | | |
| 44 | | | | |
| 45 | | | | |
| 46 | | | | |
| 47 | | | | |
| 48 | | | | |
| 49 | | | | |
| 50 | Längsnut | | | |

## Patentansprüche

1. Vorrichtung zum Überwachen des Luftdruckes in einem von der Felge eines Fahrzeugrades getragenen Luftreifen (27) mit einem am Felgenring (21) der Felge angeordneten, vom Reifendruck an seiner Außenfläche beaufschlagbaren Faltenbalg (36) als Fühlelement mit verschiebbarem Dauermagneten (40) als Meßwertgeber, in dessen Umlaufbereich ein stationar am Fahrzeug festliegender, an eine Auswertschaltung angeschlossener Meßwertsensor (42) angeordnet ist, wobei der Dauermagnet (40) bei normalem Reifendruck (P) in einem zum Meßwertsensor (42) vorgegebenen Abstand (a) ruht und dieser Abstand bei vermindertem Reifendruck geringer ist,

4

gekennzeichnet durch,

einen Druck im Inneren des Faltenbalges (36), der als Referenzdruck vom jeweiligen Druck im Luftreifen (27) unabhängig ist.

2. Vorrichtung nach Anspruch 1, dadurch gekennzeichnet, daß eine den Faltenbalg (36) umgebende Hülse (30) zumindest einen zum Reifeninneren weisenden Duchbruch (31) aufweist und im übrigen geschlossen ist.

3. Vorrichtung nach Anspruch 2, dadurch gekennzeichnet, daß der Durchbruch (31) radial zur Längsachse (M) der Hülse (30) angeordnet ist.

4. Vorrichtung nach einem der Ansprüche 2 oder 3, dadurch gekennzeichnet, daß der Faltenbalg (36) einends an der Hülse (30) festliegt und andernends durch einen Magnethalter (38) verschlossen ist.

5. Vorrichtung nach einem der Ansprüche 2 bis 4, dadurch gekennzeichnet, daß die Hülse (30) als Druckrohr ausgebildet ist.

6. Vorrichtung nach einem der Ansprüche 2 bis 5, dadurch gekennzeichnet, daß die Hülse (30) gegen Verdrehen gesichert festgelegt ist.

7. Vorrichtung nach Anspruch 6, dadurch gekennzeichnet, daß als Drehsicherung eine Nut/Feder-Verbindung (50) zwischen Hülse (30) und einer diese umfangenden Außenhülse (29) dient.

8. Vorrichtung zum Überwachen des Luftdruckes in einem von der Felge eines Fahrzeugrades getragenen Luftreifen (27) mit einem am Felgenring (21) der Felge angeordneten, vom Reifendruck an seiner Außenfläche beaufschlagbaren Faltenbalg (36) als Fühlelement mit verschiebbarem Dauermagneten (40) als Meßwertgeber, in dessen Umlaufbereich ein stationär am Fahrzeug festliegender, an eine Auswertschaltung angeschlossener Meßwertsensor (42) angeordnet ist, wobei der Dauermagnet (40) bei normalem Reifendruck (P) in einem zum Meßwertsensor (42) vorgegebenen Abstand (a) ruht und dieser Abstand bei vermindertem Reifendruck geringer ist, dadurch gekennzeichnet, daß der Faltenbalg (36) zu den Achsen des Fahrzeuges in einem Winkel (W) geneigt ist, und daß der im Inneren des Faltenbalges (36) herrschende Referenzdruck vom jeweiligen Druck im Luftreifen (27) unabhängig ist.

9. Vorrichtung nach Anspruch 8, gekennzeichnet durch einen Winkel (W) bis zu 10°.

10. Vorrichtung nach wenigstens einem der Ansprüche 1 bis 9, dadurch gekennzeichnet, daß der Dauermagnet (40) dem Meßwertsensor (42) gegenüberliegt und radial zur Achse (A) des Luftreifens (27) verschiebbar angeordnet ist.

11. Vorrichtung nach wenigstens einem der Ansprüche 1 bis 10, gekennzeichnet durch einen zugeordneten Mikroprozessor zur Kompensation des Fliehkrafteinflusses auf den Meßwertsensor (42) durch Berechnung über Drehzahlinformation.

12. Vorrichtung nach wenigstens einem der Ansprüche 1 bis 11, gekennzeichnet durch ein zugeordnetes Temperaturfühlelement.

**Claims**

1. Monitoring device for the air pressure in a tyre (27) carried by the rim of a vehicle wheel, comprising bellows (36) as a sensing element arranged on the rim ring (21) of the rim and subjected to the tyre pressure on their outer face, said bellows having a movable permanent magnet (40) as a transducer, in the rotation region of which a sensor (42) rigidly fixed to the vehicle and connected to an evaluation circuit is arranged, the permanent magnet (40) lying at a predetermined distance (a) from the sensor (42) at normal tyre pressure (P) and this distance being less at reduced tyre pressure, characterised by a pressure in the interior of the bellows (36) which, as a reference pressure, is independent of the respective pressure in the tyre (27).

2.  Device according to claim 1, characterized in that a sleeve (30) surrounding the bellows (36) has at least one opening (31) directed towards the inside of the tyre and moreover is continuous.

3.  Device according to claim 2, characterised in that the opening (31) is arranged radially with respect to the longitudinal axis (M) of the sleeve (30).

4.  Device according to one of claims 2 and 3, characterized in that the bellows (36) are fixed to the sleeve (30) at one end and at the other end are closed by a magnet holder (38).

5.  Device according to one of claims 2 to 4, characterised in that the sleeve (30) is designed as a pressure tube.

6.  Device according to one of claims 2 to 5, characterised in that the sleeve (30) is firmly secured against rotation.

7.  Device according to claim 6, characterised in that a tongue and groove connection (50) between the sleeve (30) and an outer sleeve (29) surrounding the latter serves to secure the sleeve against rotation.

8.  Monitoring device for the air pressure in a tyre (27) carried by the rim of a vehicle wheel, comprising bellows (36) as a sensing element arranged on the rim ring (21) of the rim and subjected to the tyre pressure on their outer face, said bellows having a movable permanent magnet (40) as a transducer, in the rotation region of which a sensor (42) rigidly fixed to the vehicle and connected to an evaluation circuit is arranged, the permanent magnet (40) lying at a predetermined distance (a) from the sensor (42) at normal tyre pressure (P) and this distance being less at reduced tyre pressure, characterized in that the bellows (36) are inclined at an angle (W) to the axles of the vehicle and that the reference pressure prevailing in the interior of the folded bellows (36) is independent of the respective pressure in the tyre (27).

9.  Device according to claim 8, characterised by an angle (W) of up to 10º.

10. Device according to at least one of claims 1 to 9, characterised in that the permanent magnet (40) is situated opposite the sensor (42) and is movable radially with respect to the axis (A) of the tyre (27).

11. Device according to at least one of claims 1 to 10, characterized by an associated microprocessor for compensating for the influence of the centrifugal force on the sensor (42) by means of calculation by way of speed information.

12. Device according to at least one of claims 1 to 11, characterised by an associated temperature sensing element.

**Revendications**

1.  Dispositif pour surveiller la pression d'air dans un pneumatique (27) porté par la jante d'une roue de véhicule, comportant un soufflet (36) monté sur l'anneau de jante (21) de la jante, susceptible d'être sollicité sur sa surface extérieure par la pression du pneumatique, et faisant office d'élément formant sonde comprenant un aimant permanent (40) mobile en guise de capteur de mesure, dans la zone de déplacement périphérique duquel est disposé un détecteur de mesure (42) fixé de manière stationnaire sur le véhicule et relié à un circuit d'exploitation des données, l'aimant permanent (40) se trouvant à une distance prédéfinie (a) du détecteur de mesure (42) lorsque la pression (P) du pneumatique est normale et cette distance étant plus faible lorsque la pression du pneumatique diminue,
    caractérisé par
    une pression à l'intérieur du soufflet (36), qui en guise de pression de référence est indépendante de la pression régnant à tout moment dans le pneumatique (27).

2.  Dispositif selon la revendication 1, caractérisé en ce qu'un fourreau (30) entourant le soufflet (36) comporte au moins une ouverture de passage (31) ouverte vers l'intérieur du pneumatique, et est par ailleurs fermé.

3. Dispositif selon la revendication 2, caractérisé en ce que l'ouverture de passage (31) est disposée radialement par rapport à l'axe longitudinal (M) du fourreau (30).

4. Dispositif selon l'une des revendications 2 ou 3, caractérisé en ce que le soufflet (36), à l'une de ses extrémités, est monté de manière fixe sur le fourreau (30), et est obturé à l'autre extrémité, par un support d'aimant (38).

5. Dispositif selon l'une des revendications 2 à 4, caractérisé en ce que le fourreau (30) est réalisé en tant que tube de pression.

6. Dispositif selon l'une des revendications 2 à 5, caractérisé en ce que le fourreau (30) est fixé de manière à être bloqué en rotation.

7. Dispositif selon la revendication 6, caractérisé en ce qu'une liaison à rainure et clavette (50) entre le fourreau (30) et une douille extérieure (29) qui l'entoure, fait office de blocage en rotation.

8. Dispositif pour surveiller la pression d'air dans un pneumatique (27) porté par la jante d'une roue de véhicule, comportant un soufflet (36) monté sur l'anneau de jante (21) de la jante, susceptible d'être sollicité sur sa surface extérieure par la pression du pneumatique, et faisant office d'élément formant sonde comprenant un aimant permanent (40) mobile en guise de capteur de mesure, dans la zone de déplacement périphérique duquel est disposé un détecteur de mesure (42) fixé de manière stationnaire sur le véhicule et relié à un circuit d'exploitation des données, l'aimant permanent (40) se trouvant à une distance prédéfinie (a) du détecteur de mesure (42) lorsque la pression (P) du pneumatique est normale et cette distance étant plus faible lorsque la pression du pneumatique diminue, caractérisé en ce que le soufflet (36) est incliné d'un angle (W) par rapport aux essieux du véhicule, et en ce que la pression de référence régnant à l'intérieur du soufflet (36) est indépendante de la pression régnant à tout moment dans le pneumatique (27).

9. Dispositif selon la revendication 8, caractérisé par un angle (W) allant jusqu'à 10°.

10. Dispositif selon l'une au moins des revendications 1 à 9, caractérisé en ce que l'aimant permanent (40) est situé en face du détecteur de mesure (42), et est disposé de manière à pouvoir coulisser radialement par rapport à l'axe (A) du pneumatique (27).

11. Dispositif selon l'une au moins des revendications 1 à 10, caractérisé par un microprocesseur associé, destiné à compenser l'influence de la force centrifuge sur le détecteur de mesure (42), par calcul, au moyen d'une information de vitesse de rotation.

12. Dispositif selon l'une au moins des revendications 1 à 11, caractérisé par un élément associé formant sonde de température.

Fig. 1

Fig.2

Fig.3

Fig.4

EP 0 361 005 B1